# EUROPÄISCHE PATENTSCHRIFT

(11) **EP 3 293 055 B1**
(45) Veröffentlichungstag und Bekanntmachung des Hinweises auf die Patenterteilung: **12.12.2018**
(21) Anmeldenummer: 17189858.8
(22) Anmeldetag: 07.09.2017
(51) Int. Cl.: B60R 7/06

(54) **SCHLIESSEINRICHTUNG FÜR EIN FACH**
CLOSING DEVICE FOR A COMPARTMENT
DISPOSITIF DE FERMETURE POUR UN COMPARTIMENT

(30) Priorität: 13.09.2016 DE 102016117205
(43) Veröffentlichungstag der Anmeldung: 14.03.2018
(73) Patentinhaber: Dr. Schneider Kunststoffwerke GmbH, 96317 Kronach (DE)
(72) Erfinder: Shah, Parag, 96317 Kronach (DE); Schneider, Johannes, 96328 Küps (DE)

(56) Entgegenhaltungen:
- DE-A1- 2 856 773
- JP-A- 2007 055 386
- US-A1- 2006 273 090

## Beschreibung

Es wird eine Schließeinrichtung für ein Fach beschrieben, wobei die Schließeinrichtung eine Schenkelfeder und ein bewegliches Teil zum Verschließen des Fachs aufweist. Das Fach kann bspw. ein Handschuhfach oder ein anderes Ablagefach, zum Beispiel eines Kraftfahrzeugs oder eines anderen Fahrzeugs sein. Fahrzeuge umfassen neben Personenkraftwagen, Bussen, Lastkraftwagen etc. auch Flugzeuge, Schiffe und Schienenfahrzeuge. Ein Fach oder ein Ablagefach können verschiedenartig ausgebildet sein. Zum Beispiel umfasst ein Fach auch eine verschwenkbare Sonnenblende.

Für Kraftfahrzeuge gibt es zum Verschwenken der Deckel von Handschuhfächern bzw. Handschuhkästen verschiedene Öffnungs- und Schließmechanismen.

Einerseits sind die bekannten Mechanismen sehr großbauend und komplex aufgebaut, so dass ein zusätzlicher Bauraum geschaffen werden muss, oder die Mechanismen sind nicht zuverlässig und können sehr leicht Schaden nehmen oder weisen ein zu großes Spiel auf. Darüber hinaus soll das Öffnen und Schließen von Handschuhfächern bei Fahrzeugen leichtgängig sein. Weitere wichtige Aspekte sind das sichere Erreichen einer Endposition und das Beibehalten der jeweiligen Endpositionen.

Eine einfache Vorrichtung zum Öffnen und Schließen eines Handschuhkastens ist beispielsweise in DE 10 2006 006 854 A1 offenbart. Der Handschuhkasten für ein Kraftfahrzeug weist einen Dämpfungsmechanismus mit einem elastischen Band auf, welches elastische Band zwischen einem Gehäuse und einem Deckel zum Verschließen des Handschuhkastens angeordnet ist. Das elastische Band weist jedoch den Nachteil auf, dass es relativ bald Verschleißerscheinungen zeigt und damit keinen zuverlässigen Betrieb mehr bereitstellt. Weiterhin erlaubt das elastische Band keine Sicherung von Endpositionen des Deckels, wie dem vollständig geöffneten Zustand des Deckels und dem geschlossenen Zustand des Deckels.

JP 2007 055386 A offenbart eine Schließeinrichtung für ein Fach gemäß dem Oberbegriff des Anspruchs 1.

Es ist daher Aufgabe eine Schließeinrichtung für ein Fach anzugeben, welche einen sicheren Betrieb über einen langen Zeitraum bereitstellt, wenig Platz benötigt, einfach aufgebaut ist und ein sicheres Erreichen von Endstellungen ermöglicht.

Die Aufgabe wird durch eine Schließeinrichtung mit den in Anspruch 1 angegebenen technischen Merkmalen gelöst. Vorteilhafte Weiterbildungen sind in den Unteransprüchen angegeben.

Eine Schließeinrichtung für ein Fach, das die vorstehend genannte Aufgabe löst, weist mindestens einen Spannrahmen, eine Schenkelfeder und ein Aufnahmeelement für die Schenkelfeder auf, wobei das Aufnahmeelement an einem beweglichen Teil zum Verschließen des Fachs angeordnet ist, und wobei
- der Spannrahmen mindestens eine Führung mit einer geschlossenen Führungsbahn und einem ersten Führungsabschnitt und einem zweiten Führungsabschnitt aufweist,
- ein Endabschnitt eines Schenkels der Schenkelfeder entlang des ersten Führungsabschnitts der Führung aus einer ersten Position in eine zweite Position verlagerbar ist, wobei die Schenkelfeder gespannt wird, und
- der Endabschnitt des Schenkels der Schenkelfeder entlang des zweiten Führungsabschnitts der Führung aus der zweiten Position in die erste Position verlagerbar ist, wobei die Schenkelfeder entspannt wird.

Die Schließeinrichtung ermöglicht ein sicheres Erreichen der Endstellungen und insbesondere der Endstellung, in welcher das bewegliche Teil das Fach verschließt. Beim Öffnen des Fachs wird die Schenkelfeder gespannt. Die Schenkelfeder, die auch als Drehfeder oder Torsionsfeder bezeichnet werden kann, weist einen oder zwei Schenkel auf, welche bestrebt sind, sich voneinander weg zubewegen bzw. bei einem abstehenden Schenkel sich von dem gewickelten bzw. gewundenen Abschnitt weg zubewegen. Weist die Schenkelfeder nur einen abstehenden Schenkel auf ist die Schenkelfeder über einen zweiten Schenkel mit dem Aufnahmeelement verbunden, wobei der zweite Schenkel beispielsweise quer durch den gewickelten bzw. gewundenen Abschnitt verläuft. Das Aufnahmeelement kann dabei eine entsprechend quer verlaufende Nut aufweisen, in welcher der zweite Schenkel aufgenommen ist. Die Schenkelfeder kann sich deshalb nicht um das Aufnahmeelement drehen.

Der gewundene Abschnitt der Schenkelfeder umgibt das Aufnahmeelement, das bspw. an dem beweglichen Teil angeordnet ist. Wird das bewegliche Teil zum Öffnen des Fachs verlagert, bspw. verschwenkt, so wird die Schenkelfeder entlang der Führung bewegt. Dabei wird zumindest ein Endabschnitt eines Schenkels der Schenkelfeder relativ zu dem gewundenen Abschnitt der Schenkelfeder bewegt, wodurch die Schenkelfeder gespannt wird. Der erste Führungsabschnitt ist entsprechend so ausgebildet, dass eine Verlagerung des Aufnahmeelements und damit der Schenkelfeder eine Veränderung der Auslenkung des Schenkels bewirkt. Die Veränderung der Auslenkung erfolgt derart, dass der Schenkel zu dem gewundenen Abschnitt der Schenkelfeder gedrückt wird. Erreicht das Aufnahmeelement seine Endstellung, wobei das Fach vollständig geöffnet ist, ist die Schenkelfeder gespannt. Wird das Fach verschlossen und dabei das Aufnahmeelement und die Schenkelfeder durch eine Verlagerung des beweglichen Teils bewegt, wird die Schenkelfeder entspannt, wobei der Schenkel in seine ursprüngliche Auslenkung in Bezug auf den gewundenen Abschnitt der Schenkelfeder gebracht wird. In Abhängigkeit der Ausbildung des zweiten Führungsabschnitts erfolgt das Erreichen der Endstellung, in welcher das Fach verschlossen ist, abrupt oder langsam. Der zweite Führungsabschnitt kann bspw. kurz vor einem Übergangsbereich zwischen dem zweiten Führungsabschnitt und dem ersten Führungsabschnitt, einen solchen Verlauf aufweisen, dass der Schenkel der Schenkelfeder über einen relativ kurzen Verlagerungsweg in Bezug auf das Aufnahmeelement eine relativ große Änderung der Auslenkung erfährt. Demgegenüber ist der erste Führungsabschnitt in der Regel meist so ausgebildet, dass ein kontinuierliches Spannen der Schenkelfeder mit einer kontinuierlichen Änderung der Auslenkung des Schenkels durch die Verlagerung des Aufnahmeelements erfolgt.

Der erste Führungsabschnitt bildet die Spannkurve für den Schenkel bzw. den Endabschnitt des Schenkels der Schenkelfeder. Der Verlauf des ersten Führungsabschnitts bzw. der Verlauf der Spannkurve bestimmen damit die Spannkraft der Schenkelfeder, wobei die Spannkraft vorzugsweise so gewählt wird, dass diese über den gesamten Verlagerungsweg des Aufnahmeelements im Wesentlichen konstant ist. Eine lineare Federkennlinie kann durch den Verlauf des ersten Führungsabschnitts bzw. den Verlauf der Spannkurve neutralisiert werden.

Der zweite Führungsabschnitt bildet die Arbeitskurve für die Schenkelfeder. Der Verlauf des zweiten Führungsabschnitts bzw. der Verlauf der Arbeitskurve legen fest, wie die Abgabe der Spannenergie erfolgt. Ein flacher Verlauf stellt eine kontinuierliche und langsame Abgabe der Spannenergie bereit. Ein steiler Verlauf, wobei in Bezug auf den Verlagerungsweg des Aufnahmeelements eine relativ große Änderung der Auslenkung des Schenkels der Schenkelfeder erfolgt, bewirkt eine rasche Abgabe der Spannenergie. Bspw. kann der zweite Führungsabschnitt kurv vor einem Übergangsbereich zu dem ersten Führungsabschnitt bzw. kurz vor Erreichen der ersten Position des Endabschnitts der Schenkelfeder einen stark abfallenden Verlauf aufweisen, wobei eine relative große Änderung der Auslenkung des Schenkels der Schenkelfeder erfolgt. Die Schenkelfeder bewirkt aufgrund der gespeicherten Energie ein Bewegen des Aufnahmeelements, wobei das Erreichen der geschlossenen Endstellung des Fachs durch eine plötzlich ansteigende Abgabe der restlichen gespeicherten Spannenergie ein sicheres Erreichen der Endstellung bereitstellt.

Die Verläufe des ersten Führungsabschnitts und des zweiten Führungsabschnitts können in Abhängigkeit der Ausbildung der verwendeten Komponenten und insbesondere in Abhängigkeit der Ausbildung und Abmaße des Fachs und des Teils zum Verschließen des Fachs ausgebildet werden. Insbesondere sind auch die Wege zum Öffnen und Schließen des Fachs hierbei zu berücksichtigen. Der erste Führungsabschnitt und der zweite Führungsabschnitt verlaufen insbesondere nicht parallel zueinander.

Die Komponenten können bspw. aus Kunststoff bestehen und in einem Spritzgussverfahren hergestellt werden. Lediglich die Schenkelfeder besteht aus Metall und ist vorzugsweise aus einem Federdraht gefertigt. Die Anzahl der Windungen der Schenkelfeder ist ebenfalls in Abhängigkeit der Ausbildung und Ausgestaltung der verwendeten Komponenten und auch nach Maßgabe des verwendeten Federdrahts zu bestimmen. Gleiches gilt für die Abstände der Endabschnitte der Schenkel zu dem gewundenen Abschnitt der Schenkelfeder.

Die Schließeinrichtung ermöglicht es zudem, dass ein selbstständiges oder unterstützendes Schließen eines Fachs erreicht werden kann. Zumindest kann durch die Schließeinrichtung ein vollständiges Schließen eines Fachs kurz vor dem Erreichen einer Schließstellung ermöglicht werden.

In weiteren Ausführungsformen weist der Spannrahmen eine Führungskulisse für das Aufnahmeelement auf. Über die Führungskulisse sind das Aufnahmeelement und damit die Schenkelfeder verfahrbar. Die Führungskulisse gibt vor, in welchem Umfang das Aufnahmeelement verfahren werden kann. Dadurch kann auch der Öffnungswinkel des beweglichen Teils zum Verschließen des Fachs über die Führungskulisse festgelegt werden. In bevorzugten Ausführungsformen weist die Führungskulisse einen geradlinigen Verlauf auf. Der erste Führungsabschnitt und/oder der zweite Führungsabschnitt verlaufen bei der vorstehend genannten Ausführungsform nicht über ihre gesamte Länge parallel zu der Führungskulisse und weisen jeweils Bereiche mit variierenden Abständen zu der Führungskulisse auf. Dadurch wird beim Verschieben des Aufnahmeelements und der Schenkelfeder die Auslenkung des Schenkels der Schenkelfeder verändert und das Spannen sowie Entspannen der Schenkelfeder erreicht. In weiteren Ausführungsformen kann die Führungskulisse einen nicht geradlinigen Verlauf aufweisen, wobei hierzu ein Schwenklager des beweglichen Teils zum Verschließen des Fachs entsprechend ausgebildet sein kann.

In weiteren Ausführungen kann jedoch mindestens ein Unterabschnitt beispielsweise des zweiten Führungsabschnitts im Wesentlichen parallel zu einem geradlinig verlaufenden Abschnitt einer Führungskulisse verlaufen.

In weiteren Ausführungsformen weist der erste Führungsabschnitt mindestens abschnittsweise einen gekrümmten und/oder geradlinigen Verlauf auf. Die Ausbildung des Verlaufs des ersten Führungsabschnitts regelt die Veränderung der Auslenkung des Schenkels der Schenkelfeder beim Verlagern des Aufnahmeelements, bspw. entlang einer Führungskulisse, wie bereits vorstehend angegeben.

In noch weiteren Ausführungsformen weist der zweite Führungsabschnitt mindestens abschnittsweise einen gekrümmten und/oder geradlinigen Verlauf auf. Die Ausbildung des Verlaufs des zweiten Führungsabschnitts regelt ebenfalls die Veränderung der Auslenkung des Schenkels der Schenkelfeder beim Verlagern des Aufnahmeelements, bspw. entlang einer Führungskulisse, wie bereits vorstehend angegeben. Der zweite Führungsabschnitt weist in bevorzugten Ausführungen einen Abschnitt mit einem Verlauf auf, wobei die Auslenkung des Schenkels der Schenkelfeder bei einem relativ kurzen Verlagerungsweg, bspw. einem kurzen Verschiebeweg entlang einer Kulissenführung oder Führungskulisse, eine große Änderung der Ablenkung erfährt. Ein solcher Abschnitt befindet sich vorzugsweise kurz vor einem Übergangsbereich zwischen dem zweiten Führungsabschnitt und dem ersten Führungsabschnitt, so dass kurz vor einem vollständigen Verschließen eines Fachs das Verschließen beschleunigt oder selbstständig durchgeführt wird. Dabei kommt es zu einem schlagartigen Erreichen der Endstellung des beweglichen Teils, bspw. einer Klappe oder eines Deckels. Schlagartig bedeutet nicht, dass das Schließen in bestimmten Abschnitten erfolgt. Bei Einrichtungen aus dem Stand der Technik, wie bspw. der Vorrichtung zum Öffnen und Schließen eines Handschuhkastens von DE 10 2006 006 854 A1, erfolgt das Schließen nicht zwangsläufig vollständig, da die Spannung des elastischen Bandes kurz vor dem Schließen nur noch gering ist. Bei solchen Vorrichtungen kann es notwendig sein, den Deckel von Hand in seine Endstellung zu verbringen, da die dafür vorgesehenen Mittel dies alleine nicht oder nicht mehr bewerkstelligen können. Bei der hierin beschriebenen technischen Lehre wird die Spannung der Schenkelfeder bis kurz vor Erreichen der Endstellung des beweglichen Teils durch eine entsprechende Ausbildung des Verlaufs des zweiten Führungsabschnitts sichergestellt. Vorzugsweise weist der Verlauf, wie bereits mehrfach angegeben, einen Abschnitt auf, der eine relativ große Änderung der Auslenkung des Schenkels der Schenkelfeder bei einem geringen Verschiebeweg des Aufnahmeelements bereitstellt.

In weiteren Ausführungsformen verlaufen der erste Führungsabschnitt und der zweite Führungsabschnitt nebeneinander und sind über Verbindungsabschnitte miteinander verbunden. Die Anordnung des ersten Führungsabschnitts und des zweiten Führungsabschnitts nebeneinander bedeutet, dass der erste Führungsabschnitt und der zweite Führungsabschnitt bspw. entlang einer parallel verlaufenden Schwenkachse des beweglichen Teils zum Verschließen des Fachs oder entlang einer parallel verlaufenden Mittenachse des Aufnahmeelements nebeneinander angeordnet sind. So weist der Spannrahmen in weiteren Ausführungen eine Erstreckung in einer Ebene auf, wobei der Spannrahmen zusätzlich eine bestimmte Höhe aufweist. Eine Führungskulisse erstreckt sich entlang der Ebene und kann als Öffnung die Ebene durchdringen. Die Führung verläuft dabei ebenfalls in der Ebene, wobei der erste Führungsabschnitt einen geringen Abstand zu einer Seitenfläche des Spannrahmens in der Ebene aufweist als der zweite Führungsabschnitt. Der erste Führungsabschnitt und der zweite Führungsabschnitt weisen zusätzlich noch Anlageflächen für den Endabschnitt des Schenkels der Schenkelfeder auf oder an den Endabschnitten erstrecken sich Anlageflächen. Die Verbindungsabschnitte verbinden den ersten Führungsabschnitt und den zweiten Führungsabschnitt und ermöglichen einen Übergang des Endabschnitts des Schenkels von einem ersten Führungsabschnitt zu einem zweiten Führungsabschnitt und vom zweiten Führungsabschnitt wieder zu dem ersten Führungsabschnitt. Dabei weisen die Anlageflächen der jeweiligen Führungsabschnitte in dem vorstehend genannten Beispiel jeweils einen unterschiedlichen Abstand von einer Seitenfläche des Spannrahmens in der Ebene auf. Wird das Aufnahmeelement verlagert, wird der Endabschnitt aus der ersten Position entlang des ersten Führungsabschnitts in die zweite Position verbracht. Kurz vor Erreichen der zweiten Position geht der erste Führungsabschnitt in einen Verbindungsabschnitt über, der eine Verlagerung des Endabschnitts des Schenkels der Schenkelfeder nach unten bewirkt, wobei sich der Endabschnitt unterhalb des Niveaus des ersten Führungsabschnitts und deren Anlagefläche befindet. Wird das Aufnahmeelement zum Verschließen des Fachs wieder verlagert, wird der Endabschnitt entlang des zweiten Führungsabschnitts und dessen Anlagefläche bewegt, wobei das Niveau des zweiten Führungsabschnitts unter dem Niveau des ersten Führungsabschnitts liegt. In der ersten Position ist ein weiterer Verbindungsabschnitt vorgesehen, der beim Verlagern des Aufnahmeelements und der Schenkelfeder den Endabschnitt wieder auf das Niveau des ersten Führungsabschnitts anhebt.

Hierzu kann eine Kraft erforderlich sein, die bspw. durch das Gewicht des beweglichen Teils zum Verschließen des Fachs aufgewendet wird. Ein unbeabsichtigtes Öffnen des Fachs kann durch eine zusätzliche Arretierungseinrichtung verhindert werden. Solche Arretierungseinrichtungen sind bspw. für Handschuhfächer bei Kraftfahrzeugen bekannt. Das Übergehen von dem ersten Führungsabschnitt in den zweiten Führungsabschnitt erfolgt in der Regel automatisch, wenn der Endabschnitt eine bestimmte Position erreicht hat. Ein Schließen des Fachs durch eine Zurückbewegung des beweglichen Teils erfordert in weiteren Ausführungen eine Verlagerung durch einen gesonderten Antrieb oder einen Benutzer. Ein Zurückbewegen des beweglichen Teils aus der geöffneten Stellung, wobei sich der Endabschnitt der Schenkelfeder in der zweiten Position befindet, wird in der Regel durch das Gewicht des beweglichen Teils verhindert. Darüber hinaus wird ein selbstständiges Schließen bzw. ein unbeabsichtigtes Einleiten des Schließvorgangs dadurch erschwert, dass der zweite Führungsabschnitt ausgehend vom Verbindungsabschnitt in der zweiten Position des Endabschnitts der Schenkelfeder einen geradlinigen, bspw. parallel zu einer Führungskulisse verlaufenden Abschnitt aufweist, wodurch das Entspannen der Schenkelfeder erschwert wird. Kurz vor dem Verbindungsabschnitt in der ersten Position weist der zweite Führungsabschnitt jedoch einen Abschnitt mit einem Verlauf auf, der eine relativ große Änderung der Auslenkung des Schenkels der Schenkelfeder zulässt, wodurch der bewegliche Teil sicher in seine Endstellung zum Verschließen des Fachs gebracht wird. Dies kann auch ohne zusätzliche Bewegung, bspw. durch einen Antrieb oder eine Person, erfolgen.

In weiteren Ausführungen muss der Schließvorgang ausgelöst werden. Es kann damit nicht zu einem ungewollten Schließen des Fachs kommen. Nach dem Auslösen des Schließvorgang kann der restliche Schließvorgang aber auch ohne weitere Hilfsmittel von alleine erfolgen.

In weiteren Ausführungsformen weist mindestens ein Verbindungsabschnitt eine Anlaufschräge oder eine Kurve auf. Eine Anlaufschräge oder eine Kurve erleichtern bspw. im Verbindungsbereich in der ersten Position des Endabschnitts das Verbringen des Endabschnitts vom Niveau des zweiten Führungsabschnitts zu dem Niveau des ersten Führungsabschnitts.

In weiteren Ausführungsformen verläuft der Verbindungsabschnitt im Bereich der zweiten Position parallel zu der Führungskulisse und bildet eine Verlängerung des ersten Führungsabschnitts und des zweiten Führungsabschnitts aus.

In weiteren Ausführungsformen weist der Spannrahmen zwei Führungen mit einer geschlossenen Führungsbahn auf und es ist über die beiden Führungen jeweils ein Endabschnitt der Schenkelfeder geführt. Vorzugsweise liegen die Führungen an gegenüberliegenden Seiten des Spannrahmens. Bei Schenkelfedern mit zwei abstehenden Schenkeln sind die Endabschnitte so ausgebildet, bspw. gebogen, dass sie aufeinander zu gerichtet sind. In einem Spannrahmen ist an den gegenüberliegenden Seiten jeweils eine Führung eingebracht, welche so ausgebildet sein können, wie vorstehend beschrieben. Die Führungen können dabei nicht nur an gegenüberliegenden Seiten des Spannrahmens angeordnet sein, sondern auch versetzt zueinander ausgerichtet sein. Hierdurch kann das Verschließen des Fachs weiter verbessert werden, da beide Schenkel der Schenkelfeder entsprechend gespannt werden und ein Verbringen in die Endposition bei einem geschlossenen Fach bewirken.

In weiteren Ausführungsformen weist eine Schließeinrichtung zwei Spannrahmen auf. Hierdurch kann ein gleichmäßiges Öffnen und Schließen eines Fachs durch Verlagerung von zwei Aufnahmeelementen mit daran angeordneten Schenkelfedern erreicht oder verbessert werden, wobei bspw. an zwei gegenüberliegenden Seitenabschnitten des beweglichen Teils zum Verschließen eines Fachs die Aufnahmeelemente angeordnet sind.

In noch weiteren Ausführungsformen ist das Aufnahmeelement an einer Klappe oder einem Deckel eines Ablagefachs angeordnet, und/oder der mindestens eine Spannrahmen ist an einer Seitenwand des Ablagefachs angeordnet oder in eine Seitenwand des Ablagefachs integriert. Der Spannrahmen muss daher nicht als separates Teil in eine Aufnahmeöffnung eingebracht werden sondern kann in einer Seitenwand einer Aufnahmeöffnung oder Fachwand integriert sein.

Weitere Vorteile, Merkmale und Ausgestaltungen ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung eines Spannrahmens und einer Schenkelfeder;
- Fig. 2: eine perspektivische Darstellung eines Spannrahmens und eines Aufnahmeelements mit einer Schenkelfeder;
- Fig. 3: eine schematische Darstellung eines Spannrahmens mit einer Schenkelfeder in verschiedenen Positionen;
- Fig. 4: eine schematische Darstellung eines Spannrahmens;
- Fig. 5: eine weitere schematische Darstellung eines Spannrahmens mit einer Schenkelfeder in verschiedenen Positionen;
- Fig. 6a-c: schematische Darstellungen eines Spannrahmens und einer Schenkelfeder in verschiedenen Positionen der Schenkelfeder; und
- Fig. 7a-c: perspektivische Darstellungen eines Spannrahmens und einer Schenkelfeder in verschiedenen Positionen der Schenkelfeder.

In den Zeichnungen mit gleichen Bezugszeichen versehene Teile entsprechen im Wesentlichen einander, sofern nichts anderes angegeben ist. Darüber hinaus wird darauf verzichtet Bestandteile zu zeigen und zu beschreiben, welche nicht wesentlich zum Verständnis der hierin offenbarten technischen Lehre sind.

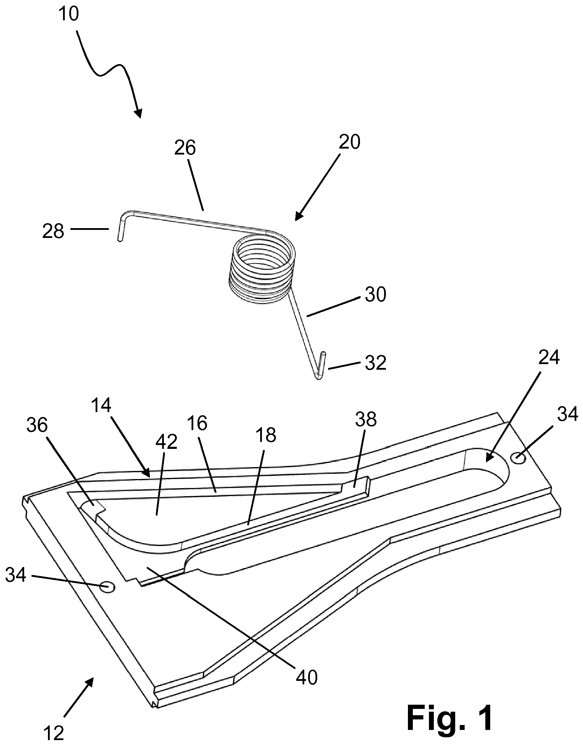

Fig. 1 zeigt eine perspektivische Darstellung eines Spannrahmens 12 und einer Schenkelfeder 20 einer Schließeinrichtung 10. Die Schließeinrichtung 10 weist weitere Bestandteile auf, die in Fig. 1 nicht gezeigt sind. Ein Aufnahmeelement 22 ist bspw. nicht dargestellt. Der Spannrahmen 12 ist entweder an einer Seitenwand einer Aufnahmeöffnung eines Fachs angeordnet oder bildet selbst ein Teil einer Seitenwand. Bspw. kann der Spannrahmen 12 auch anderweitig ausgebildet sein, wobei die Funktion der Schließeinrichtung 10 nicht beeinträchtigt wird. So kann eine Führung 14 auch in einer im Wesentlichen rechteckigen Seitenwand vorgesehen sein. Der Spannrahmen 12 ist dann Bestandteil der Seitenwand.

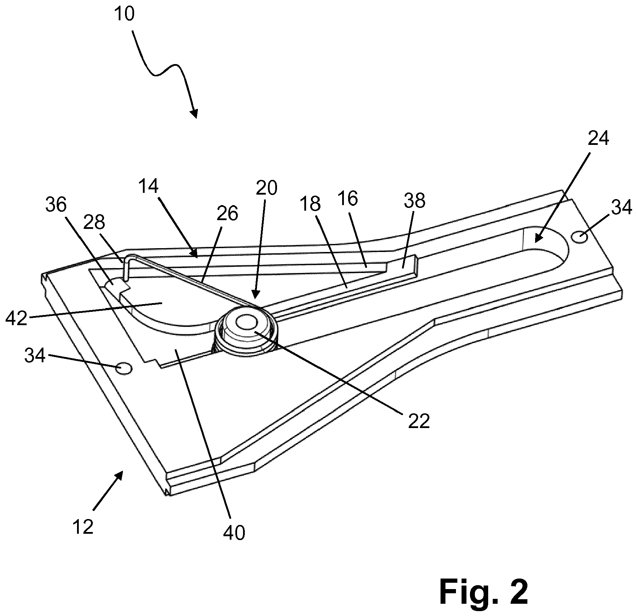

Fig. 2 zeigt eine perspektivische Darstellung eines Spannrahmens 12 mit einem in eine Führungskulisse 24 eingesetzten Aufnahmeelement 22 und einer mit dem Aufnahmeelement 22 verbundenen Schenkelfeder 20. Das Aufnahmeelement 22 kann fest mit einem Teil eines Deckels oder einem anderen beweglichen Teil zum Verschließen eines Fachs verbunden sein. Das Aufnahmeelement 22 kann aber auch über eine in Fig. 1 und 2 gezeigte Öffnung mittels einer Schraube oder einem anderen Befestigungsmittel fest mit einem Teil eines Fachs oder eines anderen beweglichen Teil zum Verschließen eines Fachs verbunden sein.

Weitere Befestigungsmöglichkeiten zur Verbindung der hierin beschriebenen Teile, soweit diese aus Kunststoff oder Metall bestehen, können ein Laserschweißen, ein Ultraschallschweißen, ein Kleben oder ähnliches umfassen. Insbesondere die Komponenten des Fachs sowie der Spannrahmen 12 und das Aufnahmeelement 22 können aus Kunststoff bestehen und bspw. durch ein Spritzgießverfahren hergestellt werden.

Der Spannrahmen 12 weist neben der Führung 14 Öffnungen 34 auf. Die Öffnungen 34 dienen zur Befestigung mit einer Seitenwand einer Aufnahmeöffnung für ein Fach, welches bspw. über einen Deckel verschlossen werden kann. Die Öffnungen 34 können aber auch entfallen, wenn der Spannrahmen 12 in einer Seitenwand integriert ist oder der Spannrahmen 12 bspw. mit einer Seitenwand verklebt ist. In die Öffnungen 34 werden Bolzen oder Schrauben zur Verbindung des Spannrahmens 12 mit einer Seitenwand eingebracht. In weiteren Ausführungsformen wird ein Spannrahmen 12 in eine Ausnehmung einer Seitenwand eingeschoben. Hierzu weist der Spannrahmen 12 eine Erhebung an einer unteren Kante und eine Erhebung an einer oberen Kante auf. Die Ausnehmung der Seitenwand weist in der Ausnehmung eine obere Nut und eine untere Nut auf. Um den Spannrahmen 12 in der Ausnehmung sicher zu halten, können dann Befestigungselemente in die Öffnungen 34 eingebracht werden. Befestigungselemente können bspw. Stifte, Bolzen, Schrauben oder ähnliches sein.

Der Spannrahmen 12 weist eine Führungskulisse 24 auf. In der Führungskulisse 24 ist ein in Fig. 1 nicht gezeigtes Aufnahmeelement 22 verlagerbar aufgenommen. Das Aufnahmeelement 22 dient zur Aufnahme eines gewundenen Abschnitts der Schenkelfeder 20. Das Aufnahmeelement 22 ist zudem mit einem beweglichen Teil zum Verschließen eines Fachs verbunden. Bspw. ist das bewegliche Teil ein Deckel eines Handschuhfachs eines Kraftfahrzeugs. Der Deckel des Handschuhfachs ist über mindestens ein Lager verschwenkbar an der Aufnahmeöffnung des Fachs angeordnet. Das Aufnahmeelement 22 ist beabstandet zur Schwenkachse durch das mindestens eine Lager an dem Deckel angeordnet. Vorzugsweise weist das Aufnahmeelement 22 einen großen Abstand zu der Schwenkachse des Deckels auf und ist nicht im Bereich der Vorderseite des Deckels angeordnet.

Die Position des Aufnahmeelements 22 in einer Position am linken Ende der Führungskulisse 24 definiert, wie weit das Fach bzw. der Deckel geöffnet werden kann. Der Grad der Öffnung hängt aber auch vom Abstand des Aufnahmeelements 22 zu der Schwenkachse des Deckels, dem Abstand zum Deckel, der Größe des Deckels, der Länge der Führungskulisse 24 und dem Verlauf der Führungskulisse 24 ab.

Die Schenkelfeder 20 weist einen gewundenen Abschnitt auf, von dem aus sich ein erster Schenkel 26 und ein zweiter Schenkel 30 erstrecken. An dem Schenkel 26 erstreckt sich ein gebogener Endabschnitt 28 und an dem Schenkel 30 erstreckt sich ein gebogener Endabschnitt 32. Der Endabschnitt 28 wird entlang der Führung 14 beim Öffnen und Schließen des Fachs bewegt. Der Endabschnitt 32 wird entlang einer in den Figuren nicht dargestellten Führung auf der Rückseite des Spannrahmens 12 bewegt. Die nicht dargestellte Führung verläuft insbesondere auf der unteren Rückseite des Spannrahmens 12, wobei die Führung 14 auf der oberen Vorderseite des Spannrahmens 12 verläuft. Die nicht dargestellte Führung ist analog zu der Führung 14 ausgebildet und unterstützt die Funktion des Schenkels 26, wobei die Funktion der Schließeinrichtung 10 mittels beider Schenkel 26 und 30 der Schenkelfeder 20 und deren Verlagerung entlang der Führung 14 und der Führung auf der Rückseite erfolgt.

Der gewundene Abschnitt der Schenkelfeder 20 umgibt einen Teil des Aufnahmeelements 22. Die Schenkelfeder 20 ist über das Aufnahmeelement 22 gehalten und mit dem Deckel bzw. dem beweglichen Teil zum Verschließen eines Fachs gekoppelt. Der gewundene Abschnitt der Schenkelfeder 20 behält seine Position in Bezug auf das Aufnahmeelement 22 bei und wird nicht verlagert. Lediglich die Schenkel 26 und 30 werden entsprechend der Position der Schenkelfeder 20 in Bezug auf die Führungskulisse 24 ausgelenkt. Wird der Deckel bzw. das bewegliche Teil über den in der Führungskulisse 24 geführten Abschnitt des Aufnahmeelements 22 verlagert, wird dadurch die Schenkelfeder 20 entsprechend verlagert. Dadurch wird die Schenkelfeder 20 durch Auslenkung der Schenkel 26 und 30 entweder gespannt oder entspannt. Die Schenkelfeder 20 kann bspw. aus einem Federdraht gefertigt sein und ist entsprechend den geforderten Bedienkräften und der Dimensionierung der Schließeinrichtung 10 und des Fachs ausgebildet und ausgelegt.

Die Führung 14 weist einen ersten Führungsabschnitt 16 und einen zweiten Führungsabschnitt 18 auf. Über einen Verbindungsabschnitt 36 sind der erste Führungsabschnitt 16 und der zweite Führungsabschnitt 18 im Bereich der ersten Position für den Endabschnitt 28 des Schenkels 26 der Schenkelfeder 20 miteinander verbunden. Der Verbindungsabschnitt 36 weist eine Krümmung auf. Über einen Verbindungsabschnitt 38 sind der erste Führungsabschnitt 16 und der zweite Führungsabschnitt 18 im Bereich der zweiten Position für den Endabschnitt 28 des Schenkels 26 der Schenkelfeder 20 miteinander verbunden.

Der erste Führungsabschnitt 16 und der zweite Führungsabschnitt 18 weisen sowohl einen voneinander verschiedenen Verlauf als auch ein voneinander verschiedenes Niveau in Bezug auf den Abstand bspw. zu der vorderen Seitenwand des Spannrahmens 12 auf. Dieser Niveauunterschied ermöglicht das Verbringen des Endabschnitts 28 von dem ersten Führungsabschnitt 16 über den Verbindungsabschnitt 38 zu dem zweiten Führungsabschnitt 18.

Bei einer Verlagerung des Endabschnitts 28 aus einer ersten Position, wobei sich in der ersten Position der Endabschnitt 28 im zweiten Führungsabschnitt 18 unmittelbar vor dem Verbindungsbereich 26 befindet und der Deckel ein Fach verschließt, in eine zweite Position, wobei sich in der zweiten Position der Endabschnitt 28 im Verbindungsbereich 38 befindet, wird der Endabschnitt 28 über den Verbindungsabschnitt 36 durch dessen Krümmung auf das Niveau des ersten Führungsabschnitts 16 gebracht. Der Endabschnitt 28 liegt dabei auf einer Anlagefläche 42 auf. Der Endabschnitt 28 und der Schenkel 26 werden hierdurch entlang der Längsachse des Endabschnitts 28 gespannt. Das Niveau des ersten Führungsabschnitts 16 wird über die Höhe der Anlagefläche 42 definiert. Entsprechend wird das Niveau über die Höhe einer Anlagefläche 40 bzw. dessen Unterschied zu der Anlagefläche 42 definiert. Wichtig bei der Führung 14 ist, dass die Anlagefläche 40 und die Anlagefläche 42 nicht in einer Ebene liegen.

Da die Anlagefläche 42 auf einem "höheren" Niveau liegt, ist eine Kraft erforderlich, um den Endabschnitt 28 auf dieses Niveau zu bringen. Diese Kraft kann bspw. durch das Gewicht des Deckels bereitgestellt werden. So kann nach einer Entriegelung des Deckels, bspw. über eine Hakenanordnung, der Deckel automatisch verschwenken und dabei eine Verlagerung des Aufnahmeelements 22 entlang der Führungskulisse 24 erfolgen. Die Verlagerung des Aufnahmeelements 22 bewirkt eine Verlagerung des Endabschnitts 28 über den Verbindungsbereich 36 entlang des ersten Führungsabschnitts 16. Der Schenkel 26 wird durch die Ausbildung des ersten Führungsabschnitts 16 in Richtung der Führungskulisse 24 gedrückt und damit die Schenkelfeder 20 gespannt. Analog gilt dies für den Schenkel 30 über die nicht gezeigte Führung auf der Rückseite des Spannrahmens 12.

Die Schenkelfeder 20 wird solange weiter gespannt, bis der Endabschnitt 28 den Verbindungsabschnitt 38 erreicht und das Aufnahmeelement 22 das Ende der Führungskulisse auf der rechten Seite (Fig. 2) erreicht. Dann befindet sich der Endabschnitt 28 in der zweiten Position und der Deckel ist geöffnet. In dieser Position ist die Schenkelfeder 20 gespannt. Beim Überführen des Endabschnitts 28 in den Verbindungsabschnitt 38 erfolgt ein Verbringen des Endabschnitts 28 auf das Niveau des zweiten Führungsabschnitts 18. Dabei wird der Endabschnitt 28 in Bezug auf dessen Auslenkung entlang seiner Längsachse entspannt, so dass das Verbringen selbstständig erfolgt. Jedoch ist die Schenkelfeder 20 immer noch gespannt, da der Schenkel 26 seine ausgelenkte Stellung beibehält.

Zum Verschließen eines Fachs wird der Deckel über einen Griff oder seine Vorderseite in Richtung der Aufnahmeöffnung für das Fach gedrückt. Dabei wird das Aufnahmeelement 22 aus seiner in Fig. 2 gezeigten Position am rechten Ende der Führungskulisse 24 nach links verlagert. Durch die Verlagerung des Aufnahmeelements 22 wird auch die Schenkelfeder 20 verlagert und der Endabschnitt 28 gleitet entlang des zweiten Führungsabschnitts 18.

Der zweite Führungsabschnitt 18 weist im Wesentlichen zwei Bereiche auf. Ausgehend vom Verbindungsabschnitt 38 erstreckt sich ein parallel zur Führungskulisse 24 verlaufender Bereich. An diesen schließt sich ein Bereich mit einer Krümmung an, der bis zum Verbindungsabschnitt 36 reicht. Während der Verlagerung des Aufnahmeelements 22 und der Schenkelfeder 20 gleitet der Endabschnitt 28 zuerst entlang des parallel zur Führungskulisse 24 verlaufenden Bereichs. Die Schenkelfeder 20 wird nicht entspannt. Aus diesem Grund muss die Schließbewegung durch eine Person oder durch einen Antrieb durchgeführt werden. Geht der Endabschnitt 28 in den Bereich mit der Krümmung über, wird die Schenkelfeder 20 entspannt, da der Schenkel 26 seine Auslenkung ändern kann. Im letzten Teilbereich des gekrümmten Bereichs des zweiten Führungsabschnitts 18 kann das Schließen des Deckels auch ohne eine Bewegung einer Person oder durch einen Antrieb erfolgen. Dies hängt unter anderem von dem Gewicht des Deckels, der Ausbildung der Schenkelfeder 20 und der Krümmung oder Ausbildung des zweiten Führungsabschnitts 18 ab. Je größer die Änderung der Auslenkung des Schenkels 26 pro zurückgelegten Weg ist, desto schneller erfolgt die Entspannung der Schenkelfeder 20. Dabei kann die über die Schenkelfeder 20 gespeicherte Energie auch schlagartig abgegeben werden, was einem Verbringen des Deckels in seine Endstellung dienlich ist. Zumindest der letzte Teilbereich des gekrümmten Bereichs des zweiten Führungsabschnitts 18 weist eine starke Krümmung oder ein Gefälle auf, so dass eine große Änderung der Auslenkung des Schenkels 26 bei einem kleinen zurückgelegten Weg möglich ist. Bspw. ist eine relativ große Änderung der Auslenkung des Schenkels 26 bei einem relativ geringen zurückgelegten Weg des Aufnahmeelements 22 und damit der Schenkelfeder 20 möglich.

Nach dem Schließen des Deckels befindet sich der Endabschnitt 28 am Ende des zweiten Führungsabschnitts 18 in unmittelbarer Nähe zum Verbindungsabschnitt 36, wobei in dieser ersten Position der Schenkel 26 seine maximale Auslenkung aufweist. Wird der Deckel wieder geöffnet, verfährt der Endabschnitt 28 über den Verbindungsabschnitt 36 entlang des ersten Führungsabschnitts 16 und der vorstehend beschriebene Vorgang wird wiederholt.

Die Schließeinrichtung ermöglicht ein Öffnen und Schließen eines Fachs mit im Wesentlichen gleichen Bedienkräften. Darüber hinaus wird sichergestellt, dass die Endstellungen des Deckels, insbesondere die geschlossene Endstellung, sicher erreicht werden.

Die Schenkelfeder 20 weist zwei Schenkel 26 und 30 auf. In den Figuren und in der Figurenbeschreibung wird die Ausbildung und Funktion der Schließeinrichtung 10 in Bezug auf den Schenkel 26 beschrieben. Der andere Schenkel 30 mit seinem Endabschnitt 32 ist aber entlang einer analog zur Führung 14 ausgebildeten Führung verschiebbar gelagert. Diese Führung befindet sich auf der Rückseite des in den Fig. 1 und 2 gezeigten Spannrahmens 12 und erstreckt sich unterhalb der Führungskulisse 24. Die Ausbildung und Ausrichtung dieser Führung ergibt sich auch durch Betrachtung des Schenkels 30, welcher entgegengesetzt zum Schenkel 26 vom gewundenen Abschnitt der Schenkelfeder 20 absteht und der entgegengesetzten Ausrichtung des Endabschnitts 32 zum Endabschnitt 28.

In weiteren Ausführungsformen weist ein Fach einen Deckel mit zwei seitlich angeordneten Aufnahmeelementen 22 auf, die jeweils mit einer Schenkelfeder 20 verbunden sind. Die Endabschnitte 28, 32 dieser Schenkelfedern 20 sind dabei jeweils in Führungen in zwei gegenüberliegenden Spannrahmen 12 an gegenüberliegenden Seitenwänden eines Aufnahmefachs angeordnet. Die Ausbildung eines Fachs mit einem Deckel und zwei Spannrahmen 12 empfiehlt sich bspw. dann, wenn der Deckel ein hohes Gewicht aufweist oder eine bestimmbare Länge überschreitet. Anstelle einer Schließeinrichtung 10 mit zwei Spannrahmen 12 können auch zwei Schließeinrichtungen 10 mit jeweils einem Spannrahmen 12 vorgesehen sein.

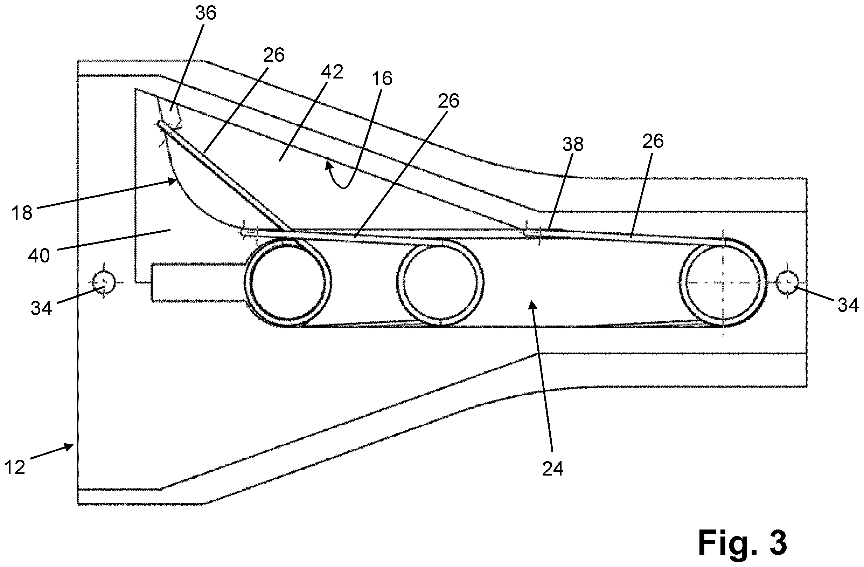

Fig. 3 zeigt eine schematische Darstellung eines Spannrahmens 12 mit einer Schenkelfeder 20 in verschiedenen Positionen. In der geschlossenen Endstellung des Fachs befinden sich das Aufnahmeelement 22 und die Schenkelfeder 20 auf der linken Seite der Führungskulisse 24. Die Schenkel 26 und 30 (Schenkel 30 in Fig. 3 nicht dargestellt) befinden sich in ihrer maximal ausgelenkten Stellung. Dabei befindet sich der Schenkel 26 am Ende des zweiten Führungsabschnitts 18 direkt vor dem Verbindungsabschnitt 36. Der Endabschnitt 28 des Schenkels 26 und der Endabschnitt 32 des Schenkels 30 befinden sich dann in ihrer ersten Position.

In der geöffneten Endstellung des Fachs befinden sich das Aufnahmeelement 22 und die Schenkelfeder 20 auf der rechten Seite der Führungskulisse 24. Die Schenkel 26 und 30 (Schenkel 30 in Fig. 3 nicht dargestellt) befinden sich in ihrer minimal ausgelenkten Stellung und sind zusammengedrückt. Die Schenkelfeder 20 ist gespannt. Dabei befindet sich der Schenkel 26 im Verbindungsabschnitt 38. Der Endabschnitt 28 des Schenkels 26 und der Endabschnitt 32 des Schenkels 30 befinden sich dann in ihrer zweiten Position.

Beim Schließen des Deckels werden das Aufnahmeelement 22 und die Schenkelfeder 20 entlang der Führungskulisse 24 von der rechten Seite aus nach links (Fig. 3) verlagert, wobei die Endabschnitte 28 und 32 entlang den zweiten Führungsabschnitten 18 verlagert werden. Der zweite Führungsabschnitt 18 ist so ausgebildet, dass bei der Verlagerung nach links der gespannte Zustand über einen weiten Bereich aufrechterhalten wird. Im letzten Abschnitt des zweiten Führungsabschnitts 18 weist dieser eine Krümmung auf. Werden das Aufnahmeelement 22 und die Schenkelfeder 20 weiter nach links verlagert, erfahren die Schenkel 26 und 30 eine Auslenkung, wobei die Schenkelfeder 20 entspannt wird. Die über die Schenkelfeder 20 gespeicherte Energie wird freigegeben und bewirkt ein Verbringen des Deckels in seine geschlossene Endstellung.

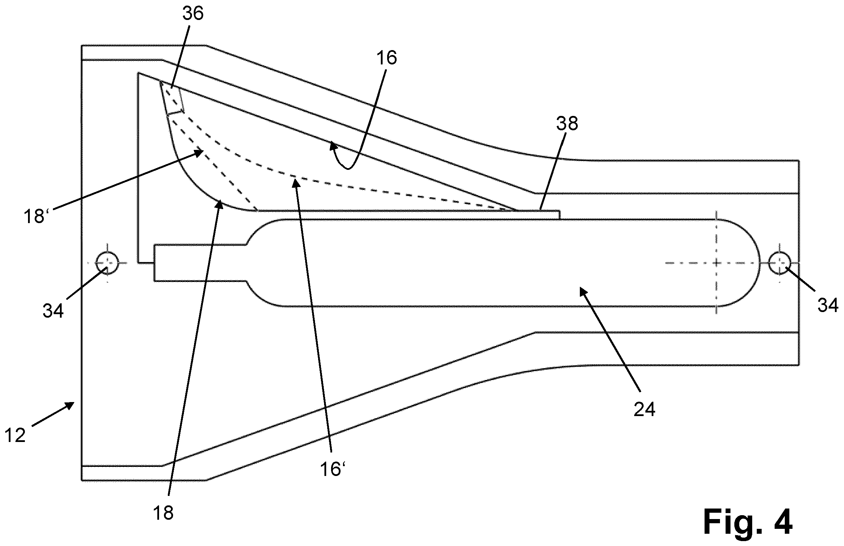

Fig. 4 zeigt eine schematische Darstellung eines Spannrahmens 12. Die Führungskulisse 24 der gezeigten Ausführungsform weist an ihrem linken Ende (Fig. 4) eine sich weiter nach links erstreckende Öffnung mit einer geringeren Weite auf. Diese Öffnung dient zum Anbringen der Schenkelfeder 20, wobei die Schenkel 26 und 30 über die Öffnung in ihre jeweiligen Führungen 14 gebracht werden können.

Fig. 4 zeigt alternative Verläufe eines ersten Führungsabschnitts 16' und eines zweiten Führungsabschnitts 18'. Die schematisch angedeuteten Führungsabschnitte 16' und 18' bewirken ein anderes Spannen und Entspannen der Schenkelfeder 20 als dies über die Führungsabschnitte 16 und 18 erreicht wird.

Ein Verlauf des ersten Führungsabschnitts 16' dämpft das Öffnen des Deckels zu Beginn. Die Geschwindigkeit der Öffnungsbewegung nimmt dabei mit zunehmenden Öffnungswinkel des Deckels zu. Ein Verlauf des zweiten Führungsabschnitts 18' bewirkt ein schnelleres Schließen des Deckels. Der Endabschnitt 28 wird entsprechend schneller in seine zweite Position verbracht als dies bspw. bei einem zweiten Führungsabschnitt 18 der Fall ist.

Anstelle der in den Figuren gezeigten ersten Führungsabschnitte 16 und 16' und zweiten Führungsabschnitte 18 und 18' können erste und zweite Führungsabschnitte auch andere Verläufe aufweisen. Diese sind dann in Abhängigkeit der Schließbewegung, der Dimensionierung der Schenkelfeder 20 und der anderen Komponenten des Fachs und der Schließeinrichtung 10 festzulegen.

Bspw. können der erste Führungsabschnitt 16, 16' und der zweite Führungsabschnitt 18, 18' auch so ausgebildet sein, dass die Spannkraft für die Schenkelfeder 20 immer gleichbleibend ist und die lineare Federkennlinie der Schenkelfeder 20 neutralisiert wird.

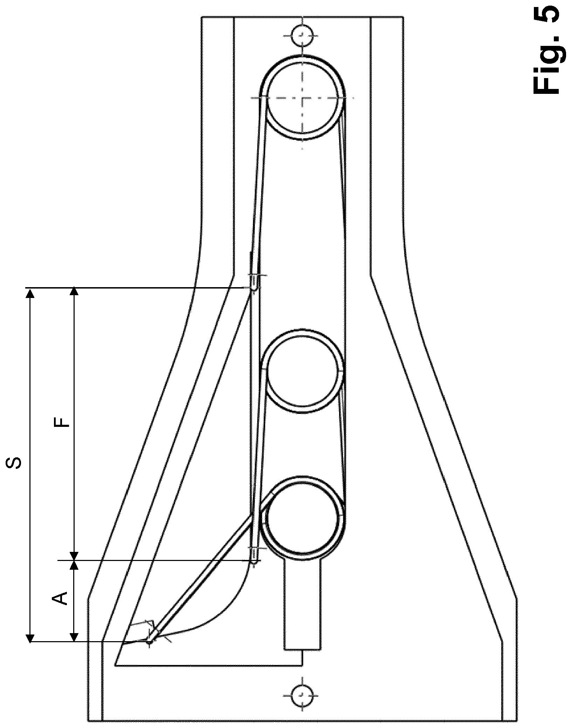

Fig. 5 zeigt eine weitere schematische Darstellung eines Spannrahmens 12 mit einer Schenkelfeder 20 in verschiedenen Positionen. Die Darstellung von Fig. 5 entspricht im Wesentlichen der Darstellung von Fig. 3.

Der erste Führungsabschnitts 16 bildet bei der Schließeinrichtung 10 dabei den Spannabschnitt S, über welchen die Schenkelfeder 20 gespannt wird. Der parallel zur Führungskulisse 24 verlaufende Bereich des zweiten Führungsabschnitts 18 bildet den Freilaufabschnitt F, wobei keine Entspannung der Schenkelfeder 20 stattfindet. Der gekrümmte Bereich des zweiten Führungsabschnitts 18 bildet den Arbeitsabschnitt A, in welchem die gespeicherte Energie der Schenkelfeder 20 abgegeben wird.

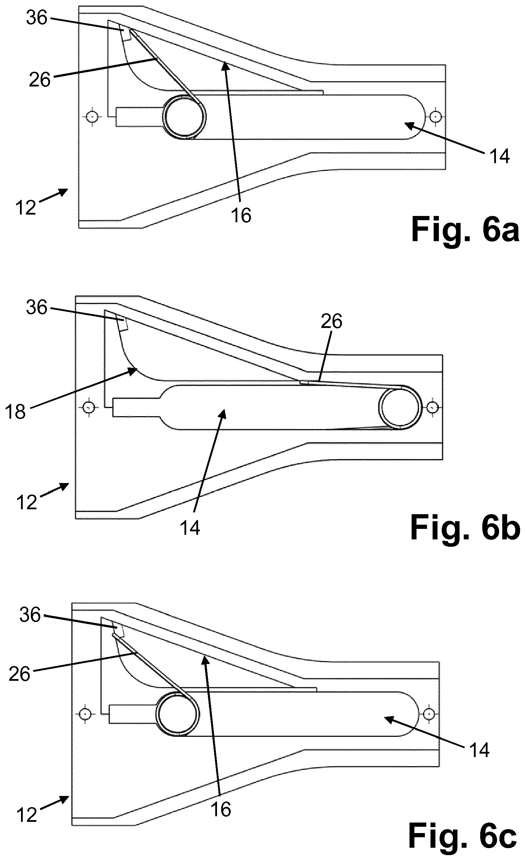

Fig. 6a-c zeigen schematische Darstellungen eines Spannrahmens 12 und einer Schenkelfeder 20 in verschiedenen Positionen der Schenkelfeder 20.

In Fig. 6a befindet sich der Endabschnitt 28 bereits im Bereich des ersten Führungsabschnitts 16 und hat den Verbindungsabschnitt 36 passiert. Der Endabschnitt 28 befindet sich dabei auf einem gegenüber dem Niveau des zweiten Führungsabschnitts 18 "höheren" Niveau. Das bedeutet, dass der Endabschnitt 28 ungeachtet seiner Auslenkung in Bezug auf die Führungskulisse 24 um einen bestimmten Betrag entlang der Längsachse des Endabschnitts 28 angehoben ist. Dieser Betrag ist durch den Höhenunterschied zwischen der Anlagefläche 40 und der Anlagefläche 42 definiert. Das Anheben des Endabschnitts 28 und analog dazu ein Anheben des Endabschnitts 32 bewirken eine Spannung der Schenkel 26 und 30. Diese Spannung wird jedoch im Gegensatz zu der Auslenkung der Schenkel 26 und 30 nicht zum Verbringen des Deckels in mindestens eine Endstellung und/oder für ein Öffnen und Schließen des Fachs mittels des Deckels mit im Wesentlichen konstanter Bedienkraft verwendet, sondern dient in erster Linie zum Verbringen der Endabschnitte 28 und 32 in den ersten Führungsabschnitt 16 und in den zweiten Führungsabschnitt 18.

Würden der erste Führungsabschnitt 16 und der zweite Führungsabschnitt 18 auf dem gleichen Niveau liegen, könnte nämlich bspw. der Endabschnitt 28 aus der zweiten Position im Bereich des Verbindungsabschnitts 38 beim Schließen des Deckels entlang des ersten Führungsabschnitts 16 verlagert werden. Die gezeigte Ausbildung verhindert ein solches Verbringen in einen nicht vorgesehenen Führungsabschnitt 16 oder 18.

Fig. 6b zeigt einen Zustand, in welchem sich der Endabschnitt 28 im Verbindungsabschnitt 38 und damit in der zweiten Position befindet. Fig. 6c zeigt einen Zustand, in welchem sich der Endabschnitt 28 vor dem Verbindungsabschnitt 36 und damit in der ersten Position befindet.

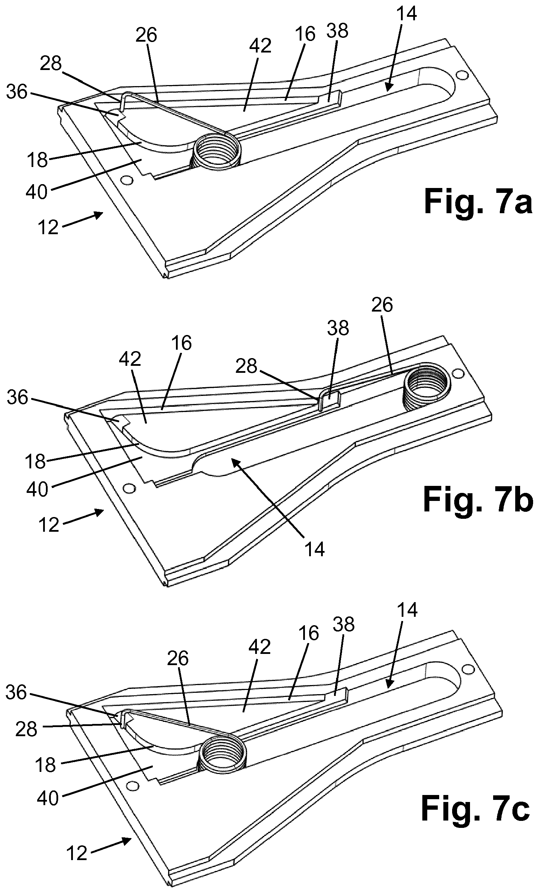

Fig. 7a-c zeigen perspektivische Darstellungen eines Spannrahmens 12 und einer Schenkelfeder 20 in verschiedenen Positionen der Schenkelfeder 20, wobei Fig. 7a eine perspektivische Darstellung des in Fig. 6a gezeigten Zustands zeigt, Fig. 7b eine perspektivische Darstellung des in Fig. 6b gezeigten Zustands zeigt und Fig. 7c eine perspektivische Darstellung des in Fig. 6c gezeigten Zustands zeigt.

### Bezugszeichenliste

- 10: Schließeinrichtung
- 12: Spannrahmen
- 14: Führung
- 16, 16': erster Führungsabschnitt
- 18, 18': zweiter Führungsabschnitt
- 20: Schenkelfeder
- 22: Aufnahmeelement
- 24: Führungskulisse
- 26: Schenkel
- 28: Endabschnitt
- 30: Schenkel
- 32: Endabschnitt
- 34: Öffnung
- 36: Verbindungsabschnitt
- 38: Verbindungsabschnitt
- 40: Anlagefläche
- 42: Anlagefläche
- S: Spannabschnitt
- A: Arbeitsabschnitt
- F: Freilaufabschnitt

## Patentansprüche

1. Schließeinrichtung für ein Fach, mindestens aufweisend einen Spannrahmen (12), eine Schenkelfeder (20) und ein Aufnahmeelement (22) für die Schenkelfeder (20), wobei das Aufnahmeelement (22) an einem beweglichen Teil zum Verschließen des Fachs angeordnet ist, **dadurch gekennzeichnet, dass**:
- der Spannrahmen (12) mindestens eine Führung (14) mit einer geschlossenen Führungsbahn und einem ersten Führungsabschnitt (16; 16') und einem zweiten Führungsabschnitt (18; 18') aufweist,
- ein Endabschnitt (28; 32) mindestens eines Schenkels (26; 30) der Schenkelfeder (20) entlang des ersten Führungsabschnitts (16; 16') der Führung (14) aus einer ersten Position in eine zweite Position verlagerbar ist, wobei die Schenkelfeder (20) gespannt wird, und
- der Endabschnitt (28; 32) des Schenkels (26; 30) der Schenkelfeder (20) entlang des zweiten Führungsabschnitts (18; 18') der Führung (14) aus der zweiten Position in die erste Position verlagerbar ist, wobei die Schenkelfeder (20) entspannt wird.

2. Schließeinrichtung nach Anspruch 1, wobei der Spannrahmen (12) eine Führungskulisse (24) für das Aufnahmeelement aufweist.

3. Schließeinrichtung nach Anspruch 1 oder 2, wobei der erste Führungsabschnitt (16; 16') mindestens abschnittsweise einen gekrümmten und/oder geradlinigen Verlauf aufweist.

4. Schließeinrichtung nach einem der Ansprüche 1 bis 3, wobei der zweite Führungsabschnitt (18; 18') mindestens abschnittsweise einen gekrümmten und/oder geradlinigen Verlauf aufweist.

5. Schließeinrichtung nach einem der Ansprüche 1 bis 4, wobei der erste Führungsabschnitt (16; 16') und der zweite Führungsabschnitt (18; 18') nebeneinander verlaufen und über Verbindungsabschnitte (36, 38) miteinander verbunden sind.

6. Schließeinrichtung nach Anspruch 4, wobei mindestens ein Verbindungsabschnitt (36) eine Anlaufschräge oder Kurve aufweist.

7. Schließeinrichtung nach Anspruch 5, wobei der Verbindungsabschnitt (38) im Bereich der zweiten Position parallel zu der Führungskulisse (24) verläuft und eine Verlängerung des ersten Führungsabschnitts (16; 16') und des zweiten Führungsabschnitts (18; 18') ausbildet.

8. Schließeinrichtung nach einem der Ansprüche 1 bis 7, wobei der Spannrahmen (12) zwei Führungen (14) mit einer geschlossenen Führungsbahn aufweist und über die beiden Führungen (14) jeweils ein Endabschnitt (28, 32) der Schenkelfeder (20) geführt ist.

9. Schließeinrichtung nach einem der Ansprüche 1 bis 8, aufweisend zwei Spannrahmen (12).

10. Schließeinrichtung nach einem der Ansprüche 1 bis 9, wobei das Aufnahmeelement (22) an einer Klappe oder einem Deckel eines Ablagefachs angeordnet ist, und/oder der mindestens eine Spannrahmen (12) an einer Seitenwand des Ablagefachs angeordnet oder in eine Seitenwand des Ablagefachs integriert ist.

## Claims

1. Closing device for a compartment, comprising at least a stressing frame (12), a leg spring (20) and a mounting element (22) for the leg spring (20), wherein the mounting element (22) is arranged at a movable part for closing the compartment, **characterised in that**:
- the stressing frame (12) has at least one guide (14) with a closed guide track and a first guide section (16; 16') and a second guide section (18; 18'),
- an end section (28; 32) of at least one leg (26; 30) of the leg spring (20) is displaceable along the first guide section (16; 16') of the guide (14) from a first position to a second position, wherein the leg spring (20) is stressed, and
- the end section (28; 32) of the leg (26; 30) of the leg spring (20) is displaceable along the second guide section (18; 18') of the guide (14) from the second position to the first position, wherein the leg spring (20) is relaxed.

2. Closing device according to claim 1, wherein the stressing frame (12) has a guide gate (24) for the receiving element.

3. Closing device according to claim 1 or 2, wherein the first guide section (16; 16') has a curved and/or straight course at least in a section.

4. Closing device according to any one of claims 1 to 3, wherein the second guide section (18; 18') has a curved and/or straight course at least in a section.

5. Closing device according to any one of claims 1 to 4, wherein the first guide section (16; 16') and the second guide section (18; 18') extend adjacent to one another and are connected together by way of connecting sections (36, 38).

6. Closing device according to claim 4, wherein at least one connecting section (36) has an entry chamfer or curve.

7. Closing device according to claim 5, wherein the connecting section (38) in the region of the second position extends parallel to the guide gate (24) and forms an extension of the first guide section (16; 16') and the second guide section (18; 18').

8. Closing device according to any one of claims 1 to 7, wherein the stressing frame (12) has two guides (14) with a closed guide track, and a respective end section (28, 32) of the leg spring (20) is guided by way of each of the two guides (14).

9. Closing device according to any one of claims 1 to 8, comprising two stressing frames (12).

10. Closing device according to any one of claims 1 to 9, wherein the receiving element (22) is arranged at a flap or a cover of a storage compartment and/or the at least one stressing frame (12) is arranged at a side wall of the storage compartment or integrated in a side wall of the storage compartment.

## Revendications

1. Système de fermeture pour un compartiment, présentant au moins un cadre de serrage (12), un ressort à branches (20) et un élément de réception (22) pour le ressort à branches (20), l'élément de réception (22) étant disposé sur une partie mobile destinée à fermer le compartiment, **caractérisé en ce que** :
- le cadre de serrage (12) comporte au moins un guidage (14) avec une voie de guidage fermée et un premier tronçon de guidage (16 ; 16') et un deuxième tronçon de guidage (18 ; 18'),
- un tronçon d'extrémité (28 ; 32) d'au moins une branche (26 ; 30) du ressort à branches (20) peut être déplacé d'une première position vers une deuxième position le long du premier tronçon de guidage (16 ; 16') du guidage (14), le ressort à branches (20) étant serré, et
- le tronçon d'extrémité (28 ; 32) de la branche (26 ; 30) du ressort à branches (20) peut être déplacé à partir de la deuxième position vers la première position le long du deuxième tronçon de guidage (18 ; 18') du guidage (14), le ressort à branches (20) étant desserré.

2. Système de fermeture selon la revendication 1, le cadre de serrage (12) comportant une coulisse de guidage (24) pour l'élément de réception.

3. Système de fermeture selon la revendication 1 ou 2, le premier tronçon de guidage (16 ; 16') présentant au moins par tronçons un profil courbé et/ou rectiligne.

4. Système de fermeture selon l'une des revendications 1 à 3, le deuxième tronçon de guidage (18 ; 18') présentant au moins par tronçons un profil courbé et/ou rectiligne.

5. Système de fermeture selon l'une des revendications 1 à 4, dans lequel le premier tronçon de guidage (16 ; 16') et le deuxième tronçon de guidage (18 ; 18') s'étendent l'un près de l'autre et sont raccordés l'un à l'autre par le biais de tronçons de raccordement (36, 38).

6. Système de fermeture selon la revendication 4, au moins un tronçon de raccordement (36) comportant un chanfrein d'entrée ou une courbe.

7. Système de fermeture selon la revendication 5, le tronçon de raccordement (38) étant, dans la zone de la deuxième position, parallèle à la coulisse de guidage (24) et constituant une prolongation du premier tronçon de guidage (16 ; 16') et du deuxième tronçon de guidage (18 ; 18').

8. Système de fermeture selon l'une des revendications 1 à 7, le cadre de serrage (12) comportant deux guidages (14) avec une voie de guidage fermée, et respectivement un tronçon d'extrémité (28, 32) du ressort à branches (20) étant guidé par le biais des deux guidages (14).

9. Système de fermeture selon l'une des revendications 1 à 8, comportant deux cadres de serrage (12).

10. Système de fermeture selon l'une des revendications 1 à 9, l'élément de réception (22) étant disposé sur un clapet ou un couvercle d'un compartiment de rangement, et/ou le cadre de serrage (12) au moins au nombre de un étant disposé sur une paroi latérale du compartiment de rangement ou étant intégré dans une paroi latérale du compartiment de rangement.
